# EUROPEAN PATENT SPECIFICATION

(11) **EP 0 529 738 B1**
(45) Date of publication and mention of the grant of the patent: **05.06.1996**
(21) Application number: 92202593.7
(22) Date of filing: 25.08.1992
(51) Int. Cl.: B23P 19/00, B65G 47/08

(54) **Multiple feed device for small objects such as screws, rivets and the like**
Mehrfach Zuführvorrichtung für kleine Objekte wie Schrauben und Niete
Dispositif d'alimentation multiple pour des petits objets comme des vis et des rivets

(30) Priority: 26.08.1991 IT CO910012
(43) Date of publication of application: 03.03.1993
(73) Proprietor: Zoppo Vigna, Ezio, I-22032 Albese con Cassano (Como) (IT)
(72) Inventor: Zoppo Vigna, Ezio, I-22032 Albese con Cassano (Como) (IT)
(74) Representative: Lanzoni, Luciano

(56) References cited:
- EP-A- 0 268 462
- US-A- 3 583 599
- US-A- 4 278 184
- US-A- 4 821 864
- PATENT ABSTRACTS OF JAPAN vol. 10, no. 88 (M-467)(2145) 5 April 1986 & JP-A-60 228 034 (TOSHIBA K.K.) 13 November 1985

## Description

This invention relates to a multiple feed device, ie a device by which objects are fed simultaneously to an indeterminate number of users of such objects (machines, devices, user stations), the objects being supplied to the device by a single conventional supply source.

The objects which are handled by the present device are of relatively small dimensions; they include for example screws, bolts or similar small items.

In particular, the device of the invention can be supplied by a circular vibrator, a linear vibrator, or a tray with a dip channel, and can feed the users via pneumatic tubes or channels.

The device of the invention can be applied as a replacement for a larger number of single feeders and is therefore particularly convenient as it considerably reduces machine space requirements and cost, while at the same time allowing simpler control of the supply source, for example by computerized means.

Moreover, the device of the invention is of relatively simple and economical manufacture and of extremely fast and reliable operation.

Said objects and advantages are attained by the present invention as defined in the claims.

The invention is described in detail hereinafter with reference to the accompanying figures, which illustrate one embodiment thereof.

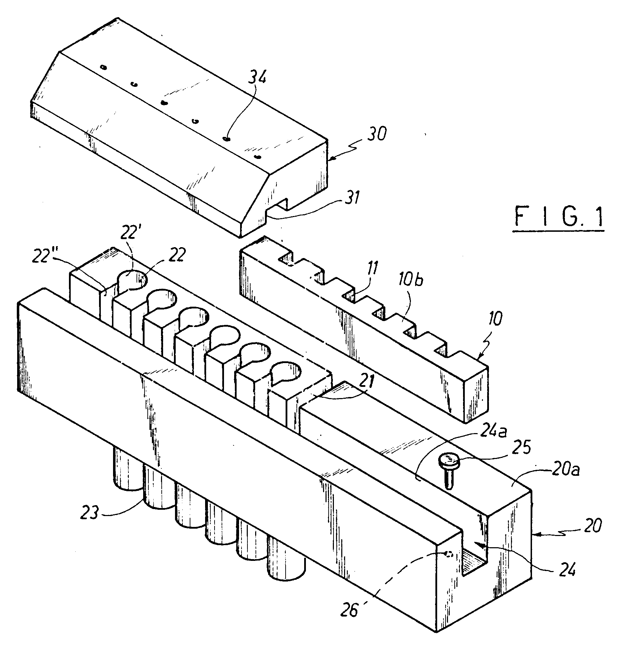

Figure 1 is an exploded perspective view of the main members of the device of the invention.

Figure 2 is a to plan view of the device of Figure 2.

Figures 3A and 3B are sections on the plane III-III of Figure 2 in two different operating stages.

The figures show the use of the device with objects 2 having an upper head 2' wider than the underlying body 2'', and in particular screws. However the invention can also be used with objects of different shape.

The device comprises an object collection element 10 of elongate longitudinally rectilinear shape. The element 10 possesses a plurality of first seats 11 arranged regularly in longitudinal succession, and open at one longitudinal face 10a of the element 10. Each seat 11 is arranged to receive and contain a single object 2 substantially as an exact fit.

A fixed body 20 is also provided having a longitudinally extending face 24a along which the longitudinal face 10a of the collection element 10 is longitudinally slidable in contact therewith. The body 20 comprises an inlet 21 which opens into the longitudinal face 24a in a position such as to face any seat 11 of the element 10 when this moves as stated hereinafter. The fixed body 20 is provided with a plurality of second seats 22 positioned to the side of the inlet 21 and arranged regularly in longitudinal succession, and open at the longitudinal face 24a. The seats 22 are each able to receive a single object 2 and enable it to be evacuated via a relative channel 23. The seats 22 are equal in number to the seats 11 and are arranged in the same mutual geometrical relationship as the seats 11; in other words the seats 22 are arranged so that they can be positioned such that all exactly face all the seats 11, with each seat 22 there corresponding a relative seat 11.

Means 19 are also provided for moving the collection element 10 relative to the fixed body 20. The movement imposed by the means 19 starts from a fixed position in which the element 10 has its own seats 11 exactly facing the seats 22 of the fixed body 20, and brings the seats 11, one at a time in succession, into positions facing the inlet 21, to then return the element 10 into said fixed position.

Thrust means are also provided to urge the objects one at a time in succession through the inlet 21 and into the seats 11 of the element 10 when the seats 11 face the inlet 21.

Means 30 are also provided to transfer the objects 2 from the seats 11 to the seats 22 with transverse movement when the collection element 10 is in said fixed position.

Thrust means are also provided to transfer the objects 2 along the evacuation channels 23 connected to the seats 22, so removing them from their seats 22 in order to transfer them to their final points of use connected to the device of the invention.

In the illustrated embodiment the fixed body 20 is of general prismatic shape elongate in a horizontal longitudinal direction. In the upper face 20a of the body 20 there is provided a horizontally extending longitudinal channel 24 able to contain the element 10 in a manner slidable in a longitudinal direction. One of the vertical faces of the channel 24 defines said longitudinal face 24a. The body 10 is also of prismatic shape and has a cross-section substantially equal to the cross-section of the channel 24 so that it is completely housed within this latter with its upper face 10b coplanar with the face 20a.

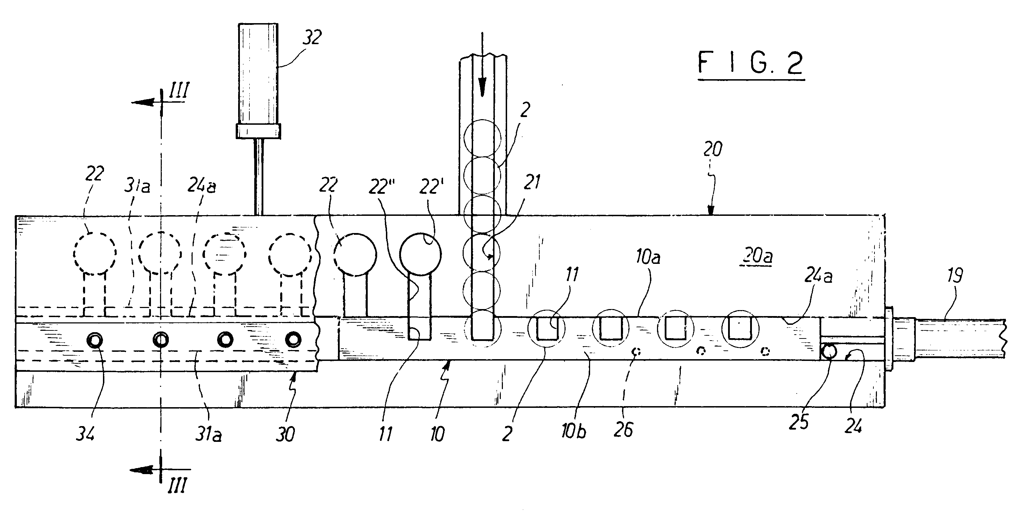

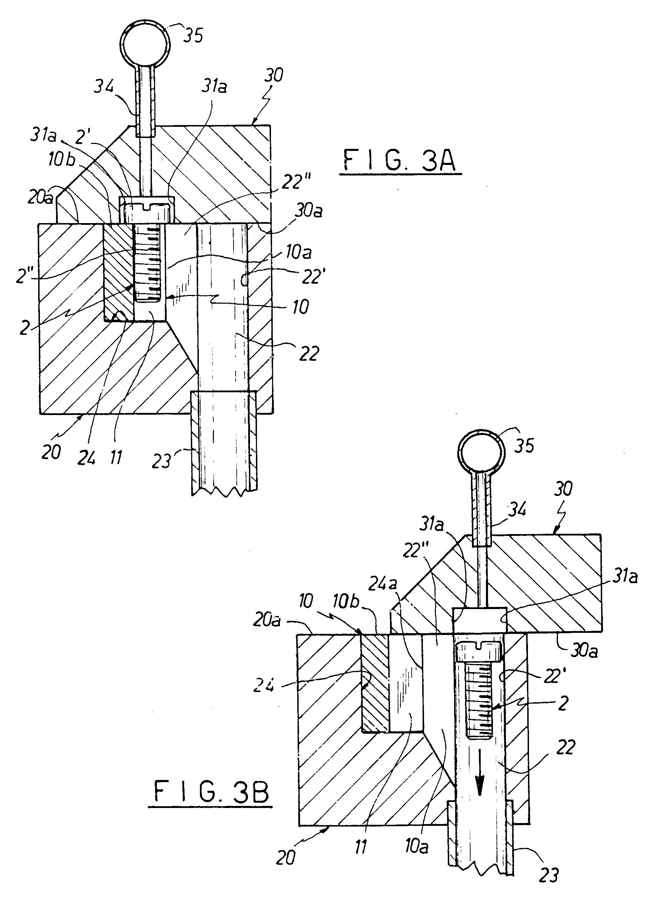

Said means 30 are in the form of an upper body arranged on the face 20a to correspond with the element 10 when this is in said fixed position. The body 30 has a thrust surface 31 acting on the upper end of the objects 2 which projects from the seats 11, and can be moved in a horizontal transverse direction by operating means 32, between a first position (shown in Figures 2 and 3A) in which the thrust surface 31 does not obstruct the longitudinal movement of the objects 2 carried by the element 10, and a second position (shown in Figure 3B) in which said surface 31 lies above and corresponds with the seats 22.

If, as in the example shown in the figures, the device operates on objects having a head 2' wider than the body 2'', such as screws, the seats 11 are defined by vertically extending slots able to contain the body 2'' substantially as an exact fit, whereas the head 2' projects upperly from the seats 11 and rests on the face 10b, being wider than the seats 11.

The seats 22 are defined by vertical through holes 22' of dimensions such as to allow passage of the entire object 2, which communicate with the longitudinal face 24a via short corridors 22'' able to allow passage of the bodies 2'', while the heads 2' project upperly and rest on the upper face 20a, being wider than the corridors 22''.

The thrust surface 31 consists of a longitudinal horizontal slot provided in the lower face 30a of the body 30, and comprising two opposing longitudinal vertical faces 31a arranged to abut against the heads 2' and spaced apart by a distance slightly greater than the width of the heads 2'. The slot 31 is able to allow the heads 2' to pass when the upper body 30 is in said first position, whereas it lies in a position aligned and centred with the holes 22' when the body 30 is in said second position.

The body 30 comprises a plurality of vertical holes 34, one for each seat 22, which open into the slot 31 and each coinciding with a respective hole 22' when the body 30 is in said second position. The holes 34 are connected via a manifold 35 to a compressed air source and are arranged to feed jets of compressed air into the holes 22'.

The body 30 is operated by means 32 of known type illustrated schematically in Figure 2. These means are for example of pneumatic type operating linearly. The figures do not show the means for connecting the body 30 to the body 20 as these are of usual type. The means 19 are also of known type and are illustrated schematically in Figure 2. The means 19 can also be of pneumatic type operating linearly.

The aforedescribed device operates in the following manner.

The objects 2 are fed one at a time in succession through the inlet 21, along which they advance suspended with their heads 2' resting on the surface 20a. The objects 2 reach the inlet 21 via any known feed means, for example assisted by vibration, and are urged towards the inlet 21 for example by suitably positioned compressed air jets produced by a pneumatic valve.

In the meantime the element 10 and the upper body 30 are operated cyclically by the means 19 and 32 in the following manner.

It will be assumed that at the beginning of its cycle the element 10 is in said fixed position and the seats 11 are empty. At this point the element 10 is made to advance (outward stroke) along the channel 24 either with constant movement or by steps, so that all its seats 11 are faced one at a time in succession by the inlet. Each time this happens an object 2 is urged by said air jets into a seat 11, with its head 2' resting on the face 10b. The object 2 therefore completely engages the seat 11 and prevents entry of the next object 2. This latter is urged into the next seat. In this manner, when all the seats 11 have passed in front of the inlet 21, all are occupied by respective objects 2 with their heads 2' resting on the face 10b and projecting upwards from it.

After this, the element 10 undergoes a return stroke and is returned to said fixed position. During this return stroke the inlet 21 is closed by the flat parts of the face 24a and by the objects 2 located in the seats 11. During this stage it is preferable for the objects located in the inlet 21 not to be urged towards the element 10 in order to prevent unnecessary friction in its contact with the objects 2 positioned in the seats 11.

In addition, during the return stroke the body 30 is at rest in said first position (Figure 3A) so that the heads 2' slide freely within the slot 31. During this stage the slot 31 retains the heads 2' and prevents the objects 2 from being able to undesirably move laterally towards and into the seats 22.

When the element 10 is in said fixed position (in which the seats 11 face the seats 22), the upper body 30 is moved into said second position by the means 32. During this travel movement the objects 2 are urged, by the contact between the rear vertical face 31a and the heads 2', firstly towards the corridor 22'' and then into the holes 22'. During this movement the heads 2' slide firstly on the face 10b and then on the face 20a. When the objects 2 reach the holes 21' compressed air is fed from the holes 34 so that the objects 2 are urged through the evacuation channels 23 to their final points of use.

After the upper body 30 has extracted the objects 2 from the element 10, this is again operated to undergo a further outward stroke, and its cycle is repeated as heretofore described. While the element 10 undergoes its outward stroke, the upper body 30 is returned into said first position and its cycle is repeated as heretofore described.

A stop element 25 can be arranged in the channel 24 to abut against the front end of the element 10 in order to limit its outward stroke. Several seats 26 can be provided for the element 25 in different longitudinal positions, with each seat there corresponding the stoppage of the element 10 in a position such that a respective number of seats 11 is unable to reach the position of the inlet 21. For example, the first seat 26 (that positioned closest to the end of the channel 24) halts the element 10 after all its seats 11 except one have passed in front of the inlet 21. The second seat 26 halts the element 10 after all its seats 11 except two have passed in front of the inlet 21, and so on. In this manner it is possible to limit the number of objects 2 which are simultaneously fed to the seats 22 and hence to correspondingly limit the number of channels 23 which are fed.

In addition the body 30 can be formed from a number of identical separate bodies in ordered longitudinal succession, each of which is arranged to act on a relative first seat 11 and on a relative second seat 12, and each being operated independently of the others. This is to be able to vary the number of objects 2 operated simultaneously and correspondingly to vary the channels 23 which are fed.

The aforedescribed operation of the device can be conveniently controlled by computerized means.

## Claims

1. A multiple feed device for small objects such as screws, rivets and the like, comprising:
- an object collection element (10) of rectilinear longitudinal extension, provided with a plurality of first seats (11) arranged in longitudinal succession and open at one longitudinal face (10a) of the element (10), each seat (11) being arranged to receive and contain a single object (2) substantially as an exact fit;
- a fixed body (20) having a longitudinally extending face (24a) along which said longitudinal face of the collection element (10) is slidable in a longitudinal direction in contact therewith;
- an inlet (21) associated with said fixed body (20) and opening into said longitudinal face (24a) of the fixed body (20) in a position such as to be faced by any one of said first seats (11) of the collection element (10);
- a plurality of second seats (22) in said fixed body (20), which are arranged in longitudinal succession and open at said longitudinal face (24a), and are arranged to each receive a single object (2) and enable it to be evacuated via a relative channel (23), said second seats (22) being equal in number to said first seats (11) and being arranged in the same mutual geometrical relationship thereas;
- means (19) for moving said collection element (10) relative to the fixed body (20) in a longitudinal direction from a fixed position in which the collection element (10) has its own seats (11) facing the second seats (22) of the fixed body (20), in such a manner as to bring the seats (11) of the collection element (10), one at a time in succession, into positions facing said inlet (21), to then return the collection element (10) into said fixed position;
- the objects (2) being urged one at a time in succession through said inlet (21) and into the first seats (11) of the collection element (10) when these seats (11) face the inlet (21);
- means (32) to transfer the objects (2) from the first seats (11) to the second seats (22) with transverse movement when the collection element (10) is in said fixed position;
- second thrust means (34, 35) to transfer the objects along the evacuation channels (23) connected to the second seats (22).

2. A device as claimed in claim 1, characterised by comprising:
- longitudinal channel (24) provided in the upper face (20a) of the fixed body (20) to slidingly contain said collection element (10), said channel (24) having a vertical face defining said longitudinal face (24a);
- an upper body (30) arranged on the face (20a), to correspond with the element (10) when this is in said fixed position, said upper body (30) having a thrust surface (31) acting on the upper end of the objects (2) which projects from the first seats (11), and being movable in a transverse direction between a first position in which said thrust surface (31) does not obstruct the longitudinal movement of the objects (2) carried by the element (10), and a second position in which said thrust surface (31) lies in correspondence with the second seats (22).

3. A device as claimed in claim 2 operating on objects (2) having an upper head (2') wider than the underlying body (2''), characterised in that:
- said first seats (11) are defined by vertical slots able to contain the body (2'') of the objects (2), whereas the head (2') projects upperly and is wider than the seats (11);
- said second seats (22) are defined by vertical through holes (22') arranged to allow passage of the entire object 2, and communicating with the longitudinal face (24a) via short corridors (22'') able to allow passage of the body (2'') of the objects (2), while the head (2') projects upperly from these;
- said thrust surface (31) is defined by a longitudinal horizontal slot provided in the lower face of the body (30), and comprising two opposing longitudinal vertical faces (31a) arranged to abut against the head (2') of the objects (2) and spaced apart by a distance slightly greater than the width of the heads (2'), said slot (31) being able to allow the heads (2') to pass when the upper body (30) is in said first position, whereas it lies in a position aligned and centred with the through holes (22') when the upper body (30) is in said second position.

4. A device as claimed in claim 3, characterised by comprising for each second seat (22) a compressed air discharge hole (34) provided in the upper body (30) in correspondence with the thrust surface (31).

5. A device as claimed in claim 3, characterised in that the upper body (30) is formed from several separate identical bodies arranged in longitudinal succession, each of which is arranged to act on a relative seat (11) and on a relative seat (22) and is able to be operated independently of the others.

6. A device as claimed in claim 2, characterised by comprising a stop element (25) positioned in the longitudinal channel (24) to limit the stroke of the collection element (10), several seats (26) being provided for the stop element (25), with each of which there corresponding the stoppage of the element (10) in a position such that a respective number of first seats (11) is unable to reach the position of said inlet (21).

## Patentansprüche

1. Mehrfach Zuführvorrichtung für kleine Objekte wie Schrauben, Niete u. ä., bestehend aus:
- ein Objektsammelement (10) mit geradliniger Längsausdehnung, versehen mit einer Vielzahl von Primärnuten (11), die in Längsfolge angeordnet und an einer Langsseite des Elements (10) offen sind (10a), wobei jede Nut (11) dafür ausgelegt ist, ein einziges Objekt (2) aufzunehmen, wobei vor allem ein genauer Sitz erreicht wird;
- ein fester Körper (20) mit Längsausdehnung (24a), wobei besagte Längsausdehnung des Sammelelements (10) in Längsrichtung verschiebbar ist und in Kontakt mit dem letzteren steht;
- ein Eingang (21), in den der feste Körper (20) eingefügt wird und der in die Längsausdehnung (24a) des festen Körpers (20) mündet, und zwar in einer Position, die jeder der besagten Primärnuten (11) des Sammelelements (10) gegenüberliegen kann;
- eine Vielzahl von Sekundärnuten (22) im besagten festen Körper (20), die in Längsfolge angeordnet, an der besagten Langsseite (24a) offen und so angeordnet sind, daß sie jeweils ein einzelnes Objekt (2) aufnehmen und dessen Auswurf durch den relativen Kanal (23) ermöglichen, wobei die Zahl der besagten Sekundärnute (22) mit der Zahl der Primärnute (11) übereinstimmt und die Anordnungen identisch sind und geometrisch miteinander in Bezug stehen;
- Mittel (19) zur Bewegung des besagten Sammelelements (10) in Längsrichtung in Bezug auf den festen Körper (20) - ausgehend von einer festen Position, in welcher die Nuten (11) des Sammelelementes (10) den Sekundärnuten (22) des festen Körpers (20) so gegenüberliegen, daß die Nuten (11) des Sammelelements jeweils nacheinander in Sequenz und in eine Position gebracht werden, die dem besagten Eingang (21) gegenüberliegt, wobei das Sammelelement (10) dann in die besagte feste Postion zurückgebracht wird,
- wobei die Objekte (2) nacheinander durch den Eingang (21) und in die Primärnuten (11) des Sammelelements (10) geschoben werden, während diese Nuten (11) dem Eingang (21) gegenüber liegen;
- Mittel (32) zum Transfer der Objekte (2) von den Primärnuten (11) mit Querbewegung zu den Sekundärnuten (22), wobei sich das Sammelelement (10) in einer festen Position befindet;
- zweite Stoßmittel (34, 35) zum Transport der Objekte längs der Auswurfkanäle (23), die mit den Sekundärnuten (22) verbunden sind.

2. Vorrichtung nach Anspruch 1, dadurch gekennzeichnet daß sie folgende Teile umfaßt:
- einen Längskanal (24), der auf der Oberseite (20a) des festen Körpers (20) ein verschiebbares Sammelelement (10) enthält, wobei dieser Kanal (24) eine Vertikalfläche hat, welche die besagte Längsseite (24a) bildet;
- einem Oberteil (30), das auf der Seite (20a) angebracht wird und eine Einheit mit dem Element (10) bildet, wenn dieses sich in der besagten festen Position befindet, während das besagte Oberteil (30) eine Schubfläche (31) hat, die auf das obere Ende der Objekte (2) wirkt, von den Sekundärnuten (11) projiziert wird und in Querrichtung beweglich ist, wobei es von einer Ausgangsposition, in welcher die besagte Schubfläche (31) die Längsbewegung der vom Element (10) getragenen Objekte (2) nicht behindert in eine zweite Position übergeht, in welcher die besagte Schubfläche (31) auf gleicher Höhe mit den Sekundärnuten (22) liegt.

3. Vorrichtung nach Anspruch 2, dadurch gekennzeichnet daß sie mit Objekten (2) funktioniert, die einen oberen Kopf (2') aufweisen, der größer ist als der darunter liegende Körper (2''), dadurch gekennzeichnet daß:
- die besagten Primärnute (11) durch vertikale Schlitze definiert werden, die den Körper (2'') der Objekte (2) aufnehmen, wobei der Kopf (2') nach oben hervorsteht und größer ist als die Nut (11)
- die Sekundärnuten (22) durch durchgehende vertikale Löcher (22') definiert werden, die so ausgelegt sind, daß das gesamte Objekt (2) hineinpaßt und die durch kurze Verbindungsgänge (22'') mit der Längsseite (24a) kommunizieren, so daß sie den Durchgang des Körpers (2'') der Objekte (2) ermöglichen, wobei der Kopf (2') oben über sie hinausragt
- die Schubfläche (31) durch einen horizontalen Schlitz definiert wird, der auf der Unterseite des Körpers (30) angebracht ist und zwei gegenüberliegende vertikale Längsflächen (31a) umfaßt die so ausgelegt sind, daß sie gegen den Kopf (2') der Objekte (2) stoßen, wobei der Abstand etwas größer als die Kopfweite (2') ist, wobei dieser Schlitz (31) die Passage der Köpfe (2') ermöglicht, wenn der obere Körper (30) sich in der besagten Primärposition befindet, wogegegen er mit den durchgehenden Löchern (22') in einer Linie und zentriert ist, wenn der obere Körper (30) sich in der besagten Sekundärposition befindet.

4. Vorrichtung nach Anspruch 3, dadurch gekennzeichnet daß sie für jede Sekundärnut (22) ein Preßluftablaßloch (34) umfaßt, das auf der Schubfläche (31) in den oberen Körper (30) eingebohrt ist.

5. Vorrichtung nach Anspruch 3 dadurch gekennzeichnet daß der obere Körper (30) aus mehreren identischen, voneinander getrennten Körpern besteht, die in Längssequenz angeordnet sind, wobei jeder dieser Körper auf die jeweilige Nut (11) und (22) angreift und unabhängig von den übrigen Körpern funktioniert

6. Vorrichtung nach Anspruch 2, dadurch gekennzeichnet daß sie ein Blockierelement (25) umfaßt, welches in den Längskanal (24) eingefügt ist, um den Hub des Sammelelements (10) zu begrenzen, wobei für das Blockierelement (25) verschiedene Nuten (26) zur Verfügung stehen, wobei bei jeder dieser Nuten die Blockierung des Elements (10) in einer Position erfolgt, in der die jeweilige Anzahl von Primärnuten (11) nicht die Position des besagten Eingangs (21) erreichen kann.

## Revendications

1. Dispositif d'alimentation multiple pour des petits objets comme des vis et des rivets, comprenant:
- un élément de collecte des objets (10), d'extension longitudinale rectiligne, pourvu d'une pluralité de premiers logements (11) disposés en succession longitudinale et ouverts sur l'une (10a) des faces longitudinales de l'élément (10), chaque logement (11) étant destiné à recevoir et contenir, sensiblement de mesure, un seul objet (2);
- un corps fixe (20) ayant une face (24a) s'étendant longitudinalement, le long de laquelle ladite face longitudinale de l'élément de collecte (10) est susceptible de glisser en direction longitudinale, au contact de celui-ci;
- une entrée (21) associée audit corps fixe (20) et débouchant dans ladite face longitudinale (24a) du corps fixe (20) à une position telle qu'elle se trouve en regard de l'un quelconque desdits premiers logements (11) de l'élément de collecte (10);
- une pluralité de deuxiémes logements (22) dans ledit corps fixe (20), lesquels sont disposés en succession longitudinale et ouverts sur ladite face longitudinale (24a), et sont destinés chacun à recevoir un objet individuel (2) et à permettre son évacuation à travers un respectif canal (23), lesdits deuxièmes logements (22) étant égaux en nombre auxdits premiers logements (11) et étant disposés selon le même rapport géométrique réciproque prévu pour lesdits premiers logements;
- des moyens (19) destinés à déplacer ledit élément de collecte (10) par rapport au corps fixe (20) en direction longitudinale à partir d'une position fixe dans laquelle l'élément de collecte (10) a ses propres logements (11) en regard des deuxièmes logements (22) du corps fixe (20), de manière à amener les logements (11) de l'élément de collecte (10), un à la foi en succession, à des positions en regard de ladite entrée (21), et ramener ensuite l'élément de collecte (10) à ladite position fixe;
- les objets (2) étant poussés, un à la fois en succession, à travers ladite entrée (21) et dans les premiers logements (11) de l'élément de collecte (10) quand ces logements (11) se trouvent en regard de l'entrée (21);
- des moyens (32) destinés à transférer les objets (2) depuis les premiers logements (11) jusqu'aux deuxièmes logements (22) par un mouvement transversal quand l'élément de collecte (10) se trouve à ladite position fixe;
- des deuxièmes moyens de poussée (34, 35) destinés à transférer les objets le long des canaux d'évacuation (23) reliés aux deuxièmes logements (22).

2. Dispositif selon la revendication 1, caractérisé en ce qu'il comporte:
- un canal longitudinal (24) ménagé sur la face supérieure (20a) du corps fixe (20), destiné à contenir de manière coulissante ledit élément de collecte (10), ledit canal (24) ayant une face verticale définissant ladite face longitudinale (24a);
- un corps supérieur (30) disposé sur la face (20a), pour correspondre avec l'élément (10) quand ce dernier se trouve à ladite position fixe, ledit corps supérieur (30) ayant une surface de poussée (31) agissant sur l'extrémité supérieure des objets (2) faisant saillie des premiers logements (11), et étant mobile en direction transversale entre une première position à laquelle ladite surface de poussée (31) n'entrave pas le mouvement longitudinal des objets (2) portés par l'élément (10), et une deuxième position à laquelle ladite surface de poussée (31) est disposée en correspondance des deuxièmes logements (22).

3. Dispositif selon la revendication 2 agissant sur des objects (2) ayant une tête supérieure (2') plus large que le corps (2'') placé au-dessous, caractérisé en ce que:
- lesdits premiers logements (11) sont définis par des rainures verticales adaptées à contenir le corps (2'') des objets (2), alors que la tête (2') fait saillie au-dessus et est plus large que les logements (11);
- lesdits deuxiêmes logements (22) sont définis par des trous verticaux de passage (22') destinés à permettre le passage de l'objet complet (2), et en communication avec la face longitudinale (24a) à travers des courts couloirs (22'') susceptibles de permettre le passage du corps (2'') des objets (2), alors que la tête (2') fait saillie au-dessus de ceux-ci;
- ladite surface de poussée (31) est définie par une rainure horizontale longitudinale ménagée dans la face inférieure du corps (30), et comprenant deux faces verticales longitudinales opposées (31a) destinées à venir buter contre la tête (2') des objets (2) et espacées l'une de l'autre d'une distance légèrement plus grande que la largeur des têtes (2'), ladite rainure (31) étant susceptible de permettre le passage des têtes (2') quand le corps supérieur (30) se trouve à ladite première position, alors qu'elle est disposée en position alignée et centrée avec les trous de passage (22') quand le corps supérieur (30) se trouve à ladite deuxième position.

4. Dispositif selon la revendication 3, caractérisé en ce qu'il comporte pour chaque deuxième logement (22) un trou (34) de déchargement d'air comprimé ménagé dans le corps supérieur (30) en correspondance avec la surface de poussée (31).

5. Dispositif selon la revendication 3, caractérisé en ce que le corps supérieur (30) est formé de plusieurs corps identiques séparés, disposés en succession longitudinale, chacun desquels est destiné à agir sur un logement respectif (11) et sur un logement respectif (22) et est susceptible d'être actionné de manière indépendante des autres.

6. Dispositif selon la revendication 2, caractérisé en ce qu'il comporte un élément d'arrêt (25) positionné dans le canal longitudinal (24) et destiné à limiter la course de l'élément de collecte (10), plusieurs logements (26) étant prévus pour l'élément d'arrêt (25), à chacun desdits logements correspondant l'arrêt de l'élément (10) à une position telle qu'un nombre respectif de premiers logements (11) n'est pas en mesure d'atteindre la position de ladite entrée (21).
